# EUROPÄISCHE PATENTSCHRIFT

(11) **EP 0 925 210 B1**
(45) Veröffentlichungstag und Bekanntmachung des Hinweises auf die Patenterteilung: **16.05.2001**
(21) Anmeldenummer: 97944725.7
(22) Anmeldetag: 20.09.1997
(51) Int. Cl.: B60S 1/08, B60S 1/58

(54) **STEUERVORRICHTUNG FÜR EINEN SCHEIBENWISCHER**
SYSTEM FOR CONTROLLING A WINDSCREEN/REAR SCREEN WIPER
DISPOSITIF DE COMMANDE POUR ESSUIE-GLACE

(30) Priorität: 24.09.1996 DE 19639137
(43) Veröffentlichungstag der Anmeldung: 30.06.1999
(73) Patentinhaber: ROBERT BOSCH GMBH, 70442 Stuttgart (DE)
(72) Erfinder: MEIER, Hans, D-77833 Ottersweier (DE); RIEHL, Günther, D-77830 Bühlertal (DE); BLITZKE, Henry, D-77815 Bühl (DE); BURKART, Manfred, D-76473 Iffezheim (DE)
(86) Internationale Anmeldenummer: DE9702135
(87) Internationale Veröffentlichungsnummer: WO9813237

(56) Entgegenhaltungen:
- DE-A- 3 737 653
- DE-A- 19 505 011
- PATENT ABSTRACTS OF JAPAN vol. 010, no. 006 (M-445), 11.Januar 1986 & JP 60 169356 A (NISSAN JIDOSHA KK), 2.September 1985,
- PATENT ABSTRACTS OF JAPAN vol. 009, no. 319 (M-439), 14.Dezember 1985 & JP 60 154940 A (FUJI JUKOGYO KK), 14.August 1985,
- PATENT ABSTRACTS OF JAPAN vol. 009, no. 060 (M-364), 16.März 1985 & JP 59 195454 A (FURUKAWA DENKI KOGYO KK), 6.November 1984,
- PATENT ABSTRACTS OF JAPAN vol. 006, no. 213 (M-167), 26.Oktober 1982 & JP 57 118955 A (SUMITOMO DENKI KOGYO KK), 24.Juli 1982,

## Beschreibung

### Stand der Technik

Die Erfindung geht aus von einer Steuervorrichtung für einen Scheibenwischer nach dem Oberbegriff des Hauptanspruchs. Aus DE-A 37 37 653 ist eine Schaltungsanordnung bekannt, die bei eingeschaltetem Frontscheibenwischer den Heckscheibenwischer einschaltet, sobald der Rückwärtsgang des Fahrzeugs eingelegt ist. Es ist außerdem bekannt (z. B. DE-OS-44 23 954), einen in einem Kraftfahrzeug vorhandenen Heckscheibenwischer über ein Bedienelement am Lenkstockschalter zu schalten, wobei das Bedienelement beispielsweise die Vorgabe Dauerwischen, Intervallwischen oder Waschen ermöglicht. Dauerwischen kann dabei teilweise mit einer festen Intervallzeit kombiniert werden, so daß die Wischrate besser der Niederschlagsmenge auf der Scheibe angepaßt ist und das Wischbild verbessert wird. Jedoch entspricht die Wischfrequenz des Heckscheibenwischers bei unterschiedlicher Niederschlagsmenge selten den Bedürfnissen des Kraftfahrzeugfahrers nach einem guten Wischbild und klarer Sicht. Ist die Wischfrequenz zu niedrig, dann wird die Sicht des Fahrers durch die sich auf der Heckscheibe bildende Wasserschicht immer wieder beeinträchtigt. Ist die Wischrate zu hoch, dann führt dies zu einem schnelleren Verschleiß der Wischerblätter durch Trockenwischen der Scheibe.

Ebenfalls nachteilig wirkt sich bei starkem Regen und großer Geschwindigkeit des Kraftfahrzeugs das Spritzwasser aus, das von unten gegen die Heckscheibe spritzt. Die freie Rücksicht und die Sicherheit werden dadurch erheblich eingeschränkt.

### Vorteile der Erfindung

Die erfindungsgemäße Steuervorrichtung für einen Scheibenwischer mit den kennzeichnenden Merkmalen des Hauptanspruchs hat den Vorteil, den Heckscheibenwischer automatisch in Abhängigkeit der Niederschlagsmenge anzusteuern.

Außerdem ist an sich bekannt, den Frontscheibenwischer mit durch einen Regensensor erhaltenen Meßsignalen anzusteuern, so daß der Frontscheibenwischer in Abhängigkeit der Niederschlagsmenge die Frontscheibe wischt. Dabei wird der Frontscheibenwischer beim Intervallbetrieb und/oder beim Dauerwischen automatisch gesteuert. Es wäre ebenfalls möglich den Heckscheibenwischer mit einem auf der Heckscheibe angebrachten Regensensor zu betreiben, eine kostengünstige und einfache Lösung ist damit für den Heckscheibenwischer aber nicht gegeben, da dann zwei separate Steuerungen mit Regensensoren erforderlich wären.

Durch die erfindungsgemäße Steuervorrichtung kann aufgrund der Meßsignale eines Regensensors, der im Wischbereich der Wischer an der Frontscheibe angebracht ist, der Frontscheibenwischer und der Heckscheibenwischer individuell angesteuert werden.

Ein Vorteil ist darin zu sehen, daß die Schaltung des Lenkstockschalters vereinfacht wird, da mit lediglich einem Bedienelement Frontscheibenwischer und Heckscheibenwischer betrieben werden können. Eine solche vereinfachte Schaltung ist kostengünstiger.

Ein weiterer Vorteil liegt darin, daß die separate Steuerung mit dem zweiten Regensensor für den Heckscheibenwischer entfällt, da der Heckscheibenwischer über einen weiteren Signalausgang der Steuerung des Frontscheibenwischers betrieben wird.

Durch die in den Unteransprüchen aufgeführten Maßnahmen ergeben sich vorteilhafte Weiterbildungen und Verbesserungen der im Hauptanspruch angegebenen Merkmale. Besonders vorteilhaft ist die Möglichkeit, die Geschwindigkeit des Kraftfahrzeugs zu erfassen und die Signale in der Steuerung zu verwerten. So kann das von unten an die Heckscheibe spritzende Spritzwasser bei schneller Fahrt berücksichtigt werden. Unter weiterer Berücksichtigung der fahrzeugspezifischen Gestaltung wie z.B. der Neigungswinkel der Heckscheibe oder die Form des Kraftfahrzeughecks (Stufenheck, Kombi usw.) bei der Grundeinstellung der Steuerung genügen die Meßsignale eines Regensensors um Frontscheibenwischer und Heckscheibenwischer automatisch mehr oder weniger stark abweichend voneinander einzuschalten und auszuschalten.

### Zeichnung

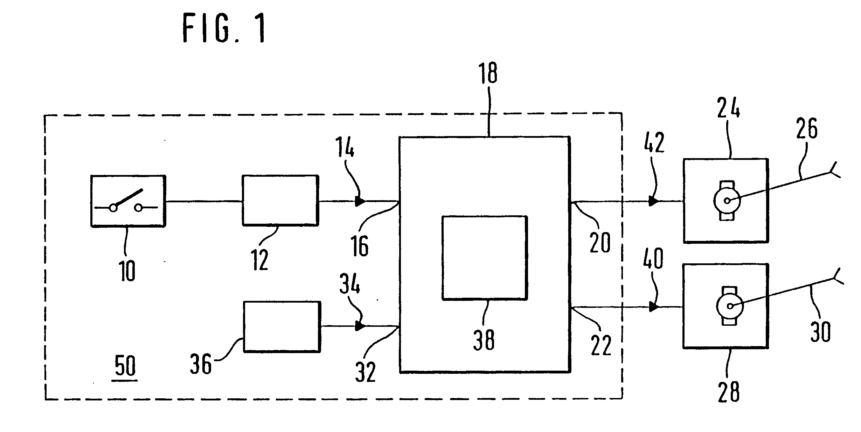

Ein Ausführungsbeispiel der Erfindung ist in der Zeichnung dargestellt und in der nachfolgenden Beschreibung näher erläutert. Figur 1 zeigt ein Blockschaltbild mit einer Steuervorrichtung zur Ansteuerung eines Frontscheibenwischers und eines Heckscheibenwischers.

### Beschreibung des Ausführungsbeispiels

Über ein Bedienelement 10 an einem Lenkstockschalter in einem Kraftfahrzeug wird ein Regensensor 12 aktiviert, dessen Meßsignale 14 ein Maß für die Feuchtigkeit auf einer nicht dargestellten Frontscheibe im Wischbereich eines Frontscheibenwischers 26 sind. Diese werden an einen Signaleingang 16 einer Steuerung 18 weitergeleitet. Die Steuerung 18 weist zwei Signalausgänge 20, 22 auf. Mit dem einen Signalausgang 20 wird der Antrieb 24 des Frontscheibenwischers 26 angesteuert, mit dem weiteren Signalausgang 22 wird der Antrieb 28 eines Heckscheibenwischers 30 angesteuert. Die Steuerung 18 erhält über einen weiteren Signaleingang 32 als weitere Eingangssignale 34 Geschwindigkeitssignale eines Geschwindigkeitsmeßgerätes 36, beispielsweise eines Tachometers. Die Steuerung 18 weist Mittel 38 auf, die eine fahrzeugspezifische Grundeinstellung des Taktverhältnisses der Steuersignale 42, 40 am Signalausgang 20 und am weiteren Signalausgang 22 bewirken, mit denen der Frontscheibenwischer 26 bzw. der Heckscheibenwischer 30 angesteuert wird. Der Takt der weiteren Steuersignale 40 weicht von dem der Steuersignale 42 mehr oder weniger stark ab.

Die erfindungsgemäße Steuervorrichtung 50 umfaßt die Steuerung 18, den Regensensor 12, das Geschwindigkeitsmeßgerät 36 und das Bedienelement 10. Sie wird über das Bordnetz des Kraftfahrzeugs versorgt und arbeitet folgendermaßen:
Um den Frontscheibenwischer 26 in Betrieb zu setzen, muß das Bedienelement 10 eingeschaltet werden. Dadurch wird der Regensensor 12 aktiviert, der die Feuchtigkeitsmenge auf der nicht dargestellten Frontscheibe im Wischbereich des Frontscheibenwischers 26 mißt und daher auf der Innenseite der Frontscheibe des Kraftfahrzeugs angebracht ist. Aufgrund der Meßsignale 14 des Regensensors 12 regelt die Steuerung 18 die Wischfrequenz des Frontscheibenwischers 26 automatisch, indem über den Signalausgang 20 Steuersignale 42 an den Antrieb 24 des Frontscheibenwischers 26 geleitet werden. Wird eine große Feuchtigkeitsmenge gemessen, dann wischt der Frontscheibenwischer mit einer hohen Wischfrequenz. Bei abnehmender bzw. entsprechend niedrigerer Feuchtigkeitsmenge wird mit einer abnehmenden bzw. geringeren Wischfrequenz gewischt.

Die Steuerung 18 der erfindungsgemäßen Steuervorrichtung 50 stellt an dem weiteren Signalausgang 22 weitere Steuersignale 40 für den Antrieb 28 eines Heckscheibenwischers 30 bereit. Der Heckscheibenwischer 30 wird also ebenfalls automatisch aufgrund desselben Meßsignals 14 des Regensensors 12 am Signaleingang 16 der Steuerung 18 betrieben.

Die optimale Wischfrequenz des Heckscheibenwischers 30 ist meistens geringer als die des Frontscheibenwischers 26. Dies ist dadurch zu erklären, daß bei einem stehenden oder einem fahrenden Kraftfahrzeug mehr Niederschlag auf die Frontscheibe gelangt als auf die Heckscheibe. Bei einem stehenden Kraftfahrzeug wirkt sich lediglich der meistens größere Neigungswinkel gegen die Horizontale der Heckscheibe im Vergleich zur Frontscheibe auf die auftreffende Feuchtigkeitsmenge aus. Wird das Fahrzeug in Bewegung gesetzt, dann vergrößert sich die auftreffende Feuchtigkeitsmenge auf der Frontscheibe und verringert sich auf der Heckscheibe mit steigender Geschwindigkeit des Fahrzeugs. Ab einer bestimmten Geschwindigkeit und einer bestimmten Wassermenge auf der Straße gelangt zusätzlich noch Spritzwasser von den Hinterrädern auf die Heckscheibe. Um den beschriebenen geschwindigkeitsabhängigen Einfluß berücksichtigen zu können, weist die Steuerung 18 den weiteren Signaleingang 32 auf, über den sie Eingangssignale 34 des Geschwindigkeitsmeßgeräts 36 erhält, dessen Geschwindigkeitsmeßwerte 34 der Steuerung 18 über ein Bussystem zugeführt werden.

Die Grundeinstellung des Wischfrequenzverhältnisses von Heck- 30 zu Frontscheibenwischer 26 wird durch die Fahrzeugdaten des Fahrzeugherstellers vorgegeben. Dabei wird das Verhältnis der Neigungswinkel von Heck- und Frontscheibe zueinander bestimmt und die Gestaltung des Fahrzeughecks, z. B. wegen Spritzwasser, berücksichtigt. So gelangt an die Heckscheibe eines Stufenhecks weniger Spritzwasser als an die Heckscheibe eines Kombis. Der Einfluß der fahrzeugspezifischen Gestaltung des Kraftfahrzeugs kann durch die Mittel 38, die die Grundeinstellung der Wischfrequenz bewirken, berücksichtigt werden. Diese Mittel 38 können z. B. eine Programmsteuerung oder ein Mikroprozessor sein. Die Grundeinstellung des Wischfrequenzverhältnisses kann den Wert 1:10 oder 1:5 annehmen. Mit zunehmender Fahrzeuggeschwindigkeit wird sich dann durch die Signale 34 des Tachometers 36 dieses Taktverhältnis verringern und ab einer bestimmten Geschwindigkeit, bei Auftreten von Spritzwasser, wieder erhöhen.

Alternative Ausführungsbeispiele sind die halbautomatische Wischersteuerung (Intervallbetrieb mit Regensensor und Dauerbetrieb ohne Regensensor) oder die manuelle Wischersteuerung (kein Regensensor). Auch hier kann die Wischfrequenz des Heckscheibenwischers 30 aufgrund der Grundeinstellung und der Geschwindigkeit des Fahrzeugs eingestellt werden. Wischt der Frontscheibenwischer 26 mit einer konstanten, manuell eingestellten Wischfrequenz im Dauer- oder Intervallbetrieb, so variiert die Wischfrequenz des Heckscheibenwischers lediglich mit der Geschwindigkeit, nicht mehr mit der Niederschlagsmenge.

Eine einfachere Gestaltung der oben genannten Ausführungsbeispiele erhält man, wenn das weitere Eingangssignal 34 des Geschwindigkeitsmeßgeräts 36 lediglich die Über- oder Unterschreitung einer vorgegebenen Geschwindigkeit anzeigt. Eine mögliche vorgegebene Geschwindigkeit beträgt 30 Kilometer/Stunde.

## Patentansprüche

1. Steuervorrichtung (50) für einen Frontscheibenwischer (26) eines Kraftfahrzeugs, mit wenigstens einem Signalausgang (20) einer Steuerung (18) für erste Steuersignale (42) zur Betätigung des Scheibenwischers, und einen ersten Signaleingang (16), wobei die Steuerung (18) einen weiteren Signalausgang (22) für weitere, von ersten Steuersignalen (42) abweichende Steuersignale (40) aufweist, mit denen ein Heckscheibenwischer (30) eines Kraftfahrzeugs, ansteuerbar ist, dadurch gekennzeichnet, daß die Steuerung (18) über einen weiteren Signaleingang (32) Eingangssignale (34) erhält, die ein Maß für die Geschwindigkeit des Kraftfahrzeugs sind, und daß die weiteren Steuersignale (40) von diesen Eingangssignalen (34) beeinflußt sind.

2. Steuervorrichtung (50) für einen Scheibenwischer nach Anspruch 1, dadurch gekennzeichnet, daß sie ein Bedienelement (10) enthält, mit dem der Fahrer des Kraftfahrzeugs die Steuerung (18) der Scheibenwischer (26, 30) ein- und ausschalten kann und/oder einen Wischbetrieb des Frontscheibenwischers (26), z. B. Dauerwischen oder Intervallwischen, auswählen kann.

3. Steuervorrichtung (50) für einen Scheibenwischer nach Anspruch 1 oder 2, dadurch gekennzeichnet, daß sie einen mit einem Signaleingang (16) der Steuerung (18) verbundenen Regensensor (12) enthält, dessen Meßsignale (14) ein Maß für die Feuchtigkeit auf der Frontscheibe im Wischbereich des Frontscheibenwischers (26) sind.

4. Steuervorrichtung (50) für einen Scheibenwischer nach Anspruch 1, dadurch gekennzeichnet, daß sie Mittel (38) enthält, die eine von der fahrzeugspezifischen Gestaltung der Heckscheibe und des Kraftfahrseughecks abhängige Grundeinstellung der Wischfrequenz für die weiteren Steuersignale (40) bewirken.

5. Steuervorrichtung (50) für einen Scheibenwischer nach Anspruch 2, 3 oder 4, dadurch gekennzeichnet, daß die weiteren Steuersignale (40) den Antrieb (28) des Heckscheibenwischers (30) in Abhängigkeit von der Stellung des Bedienelements und/oder der Feuchtigkeit auf der Frontscheibe und/oder der Geschwindigkeit des Kraftfahrzeugs oder von der Grundeinstellung taktet.

## Claims

1. Control device (50) for a windscreen wiper (26) of a motor vehicle, having at least one signal output (20) of a controller (18) for first control signals (42) for actuating the screen wiper, and a first signal input (16), the controller (18) having a further signal output (22) for further control signals (40), which deviate from first control signals (42) and with the aid of which a rear screen wiper (30) of a motor vehicle can be driven, characterized in that the controller (18) receives, via a further signal input (32), input signals (34) which are a measure of the speed of the motor vehicle, and in that the further control signals (40) are influenced by these input signals (34).

2. Control device (50) for a screen wiper according to Claim 1, characterized in that it includes a control element (10) with the aid of which the driver of the motor vehicle can switch on and off the controller (18) of the screen wipers (26, 30), and/or can select a wiping mode of the windscreen wiper (26), for example continuous wiping or interval wiping.

3. Control device (50) for a screen wiper according to Claim 1 or 2, characterized in that it includes a rain sensor (12) which is connected to a signal input (16) of the controller (18) and whose measurement signals (14) are a measure of the moisture on the windscreen in the wiping area of the windscreen wiper (26).

4. Control device (50) for a screen wiper according to Claim 1, characterized in that it includes means (38) which effect a basic setting of the wiping frequency for the further control signals (40) as a function of the vehicle-specific configuration of the rear screen and of the motor vehicles tail.

5. Control device (50) for a screen wiper according to Claim 2, 3 or 4, characterized in that the further control signals (40) clock the drive (28) of the rear screen wiper (30) as a function of the setting of the control element and/or the moisture on the windscreen and/or the speed of the motor vehicle or of the basic setting.

## Revendications

1. Dispositif de commande (50) d'un essuie-glace de pare-brise (26) d'un véhicule automobile, comportant au moins une sortie de signal (20) d'une commande (18) pour des premiers signaux de commande (42) destinés à mettre en service l'essuie-glace, ainsi qu'une première entrée de signal (16), la commande (18) comportant une seconde sortie de signal (22) pour des seconds signaux de commande (40) dérivant des premiers signaux (42) et par lesquels on peut commander l'essuie-glace (30) de la lunette arrière du véhicule,
caractérisé en ce que
la commande (18), par une seconde entrée de signal (32) reçoit des signaux d'entrée (34) constituant une mesure de la vitesse du véhicule, ces signaux (34) influençant les seconds signaux de commande (40).

2. Dispositif de commande (50) selon la revendication 1,
caractérisé en ce qu'
il comprend un organe de service (10) par lequel le conducteur du véhicule peut mettre en service et hors service la commande (18) des essuie-glaces (26, 30) et/ou sélectionner le mode de balayage de l'essuie-glace de pare-brise (26), par exemple en continu ou par intermittence.

3. Dispositif de commande (50) selon l'une des revendications 1 ou 2,
caractérisé en ce qu'
il comporte un détecteur de pluie (12) relié à une entrée de signal (16) de la commande (18) et dont les signaux (14) constituent une mesure de l'humidité existant sur le pare-brise, dans la zone de balayage de l'essuie-glace (26).

4. Dispositif de commande (50) selon la revendication 1,
caractérisé en ce qu'
il comprend des moyens (38) qui, en fonction de la configuration spécifique au véhicule, de la lunette et de la partie arrière de l'automobile, effectuent un réglage de base de la fréquence de balayage pour les seconds signaux de commande (40).

5. Dispositif de commande (50) selon les revendications 2, 3 ou 4,
caractérisé en ce que
les seconds signaux de commande (40) cadencent l'entraîneur (28) de l'essuie-glace (30) de la lunette arrière en fonction de la position de l'organe de service et/ou de l'humidité régnant sur le pare-brise et/ou de la vitesse de l'automobile ou du réglage de base.
